# EUROPEAN PATENT APPLICATION

(11) **EP 3 153 791 A1**
(43) Date of publication of application: **12.04.2017**
(21) Application number: 15188291.7
(22) Date of filing: 05.10.2015
(51) Int. Cl.: F24J 2/06, F24J 2/08, G02F 1/01, G02F 1/29, F24J 2/40

(54) **A METHOD AND APPARATUS FOR CONCENTRATING SOLAR ENERGY**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A solar concentrator apparatus for capturing solar energy and focussing said energy toward a specified region (200), the apparatus comprising an electromagnetic radiation source (204) and a control system configured to cause electromagnetic radiation from said source to be applied to a selected plurality of three-dimensional portions of an atmospheric volume in a radiation path between a solar source (208) and said specified region (200) so as to heat and/or ionise the air within said portions, wherein said selected portions are spatially located together in a three-dimensional configuration so as to simulate an electromagnetic radiation path modifying element (206) for capturing said solar energy and directing and/or converging said captured energy toward a focal point at or adjacent to said specified region (200). A method of creating an atmospheric electromagnetic radiation path modifying element operative to simulate a solar concentrator is also described.

## Description

This invention relates generally to a method and apparatus for concentrating solar energy and, more particularly but not necessarily exclusively, to a method and apparatus for capturing and concentrating or focussing the solar energy onto a specified region, for example, a solar panel of a solar power generation system.

Solar panel electricity or power generation systems are well known and widely used, and employ an array of solar panels which may incorporate one or more photovoltaic cells or comprise solar hot water panels. The effectiveness of a solar panel is essentially defined by the number of photons from the available sunlight it can capture and convert into energy, and it will be apparent to a person skilled in the art that a solar panel is at its most effective around midday during a clear day in mid summer, when the sun is at its highest point and sunlight falls substantially vertically onto the solar panels, thereby utilising the maximum possible surface area to collect photons for conversion. However, at other times of the day and year and when there is a lot of cloud, output is reduced significantly. In particular, even during clear days during the summer, as the sun moves across the sky, and sunlight is therefore incident on the solar panels from an angle, the effective surface area of the panel, and therefore its effectiveness, is significantly reduced.

There is an ongoing desire to improve the effectiveness of solar panels and, for example, it has been proposed to coat the panels with a reflective coating that enables the panels to capture more solar energy from an angle. Some recent module designs include concentrators in which light is focussed by lenses or mirrors onto an array of smaller cells. However, such designs still have a significantly reduced effectiveness when sunlight is incident thereon from an angle relative to that achievable from direct sunlight. Furthermore, such designs tend to be relatively complex to install, requiring numerous additional components, which increases the cost of installation and maintenance, and makes resultant systems more vulnerable to failure.

It is an object of aspects of the present invention to ameliorate at least some of these issues.

In accordance with the present invention, there is provided a solar concentrator apparatus for capturing solar energy and focussing said energy toward a specified region, the apparatus comprising an electromagnetic radiation source and a control system configured to cause electromagnetic radiation from said source to be applied to a selected plurality of three-dimensional portions of an atmospheric volume in a radiation path between a solar source and said specified region so as to heat and/or ionise the air within said portions, wherein said selected portions are spatially located together in a three-dimensional configuration so as to simulate an electromagnetic radiation path modifying element for capturing said solar energy and directing and/or converging said captured energy toward a focal point at or adjacent to said specified region.

The selected portions may be spatially located together in a substantially unbroken three-dimensional configuration corresponding to the three-dimensional shape of a simulated electromagnetic radiation path modifying (e.g. optical) element.

In another exemplary embodiment, the selected portions may be configured such that the non-selected portions are in a configuration corresponding to a three-dimensional shape of a simulated electromagnetic radiation path modifying device.

In yet another exemplary embodiment, the selected portions may be spatially located together in a three-dimensional configuration corresponding to an annulus having a non-circular cross-section.

The electromagnetic radiation path modifying element simulated by said selected portions may be a lens, and the control system may be configured to cause electromagnetic radiation from said source to be applied to said selected plurality of three-dimensional portions so as to heat the air therein and change the refractive index thereof.

In an exemplary embodiment of the invention, the electromagnetic radiation path modifying element simulated by said selected portions may be a converging lens and said selected portions are spatially located together in a concave lens configuration. In this case, the atmospheric element may be operative to simulate a converging lens and the non-selected portions are spatially located together in a convex lens configuration.

In alternative exemplary embodiments of the invention, the electromagnetic radiation path modifying element simulated by said selected portions may be a diffractive lens and said selected portions define a plurality of three-dimensional shapes, each spatially separated from each other within said atmospheric volume. In this case, the atmospheric element may be operative to simulate a diffractive lens and said three-dimensional shapes, spatially separated, define a plurality of concentric transmissive and adjacent substantially opaque regions in the form of a zone plate.

In yet another exemplary embodiment of the invention, the electromagnetic radiation path modifying element simulated by said selected portions may be a reflective device and the control system may be configured to cause electromagnetic radiation from said source to be applied to said selected plurality of three-dimensional portions so as to ionise the air therein.

The atmospheric volume may be divided into an array of three dimensional portions, and said control system may be configured to cause said electromagnetic radiation from said source to be sequentially applied to said selected portions.

The electromagnetic radiation source may comprise a beam steering mechanism for selectively steering a beam of electromagnetic radiation output therefrom, said control system being communicably coupled to said beam steering mechanism and configured to generate signals for steering said beam of electromagnetic radiation relative to said atmospheric volume so as to sequentially apply electromagnetic radiation to said selected portions.

The electromagnetic radiation source may comprise one or more laser sources.

The apparatus may further comprise a lens monitoring module for monitoring atmospheric conditions along the path between the electromagnetic radiation source and the simulated electromagnetic radiation path modifying element including within the element itself and the surrounding volume of said element, generating data representative thereof, and transmitting said data to said control system which is further configured to adjust at least one characteristic of said electromagnetic radiation applied to said selected portions of said atmospheric volume so as to compensate for atmospheric distortion. In addition, or alternatively, the apparatus may further comprise a quality monitoring module for monitoring the performance of the simulated electromagnetic radiation path modifying element against a predefined set of desired criteria, and generating signals to dynamically adjust beam steering and/or power of the electromagnetic radiation source so as to reduce or eliminate deviation of the properties and characteristics of the simulated electromagnetic radiation path modifying element from that which is defined by the predefined criteria.

In accordance with another aspect of the present invention, there is provided a method of creating an atmospheric electromagnetic radiation path modifying element operative to simulate a solar concentrator, the method comprising applying electromagnetic radiation to a selected plurality of three-dimensional portions of an atmospheric volume so as to heat and/or ionise the air within said portions, wherein said selected portions are spatially located together in a substantially unbroken three-dimensional configuration.

Other aspects of the present invention extend to a control system for apparatus as described above configured to be communicably coupled to said electromagnetic radiation source, said control system comprising a database on which is stored data representative of a three-dimensional configuration of a plurality of three-dimensional element, and a processor for mapping said stored three-dimensional configuration of elements to an atmospheric volume, the processor being further configured to generate actuation signals configured to cause said electromagnetic radiation source to apply electromagnetic radiation to a selected plurality of portions of said atmospheric volume so as to heat and/or ionise the air therein, said selected portions being spatially located together in substantially the same configuration as said stored three-dimensional configuration of elements.

These and other aspects of the present invention will be apparent from the following specific description in which embodiments of the present invention are described, by way of examples only, and with reference to the accompanying drawings, in which:
Figure 1 is a schematic diagram illustrating the concept of an M by N cell matrix for the purposes of defining an atmospheric volume within which an atmospheric electromagnetic radiation path component may be created for use in a solar concentrator apparatus in accordance with an exemplary embodiment of the present invention;
Figure 2 is a schematic diagram illustrating the manner in which laser power may be applied to selected cells within a matrix to create an atmospheric electromagnetic radiation path modifying element for use in a solar concentrator according to a first exemplary embodiment of the present invention;
Figure 3 is a schematic diagram illustrating an alternative manner in which laser power may be applied to selected cells within a matrix to create an atmospheric electromagnetic radiation path modifying element for use in a solar concentrator according to another exemplary embodiment of the present invention;
Figure 4 is a schematic diagram illustrating an atmospheric converging lens for use in a solar concentrator according to an exemplary embodiment of the present invention;
Figure 5 is a schematic diagram illustrating an atmospheric Fresnel zone plate created for use in a solar concentrator according to an exemplary embodiment of the present invention;
Figure 6 is a schematic diagram of a focussing arrangement employing atmospheric reflective components for use in a solar concentrator apparatus according to an exemplary embodiment of the present invention;
Figure 6A is a schematic side view of the focussing arrangement of Figure 6;
Figure 7 is a schematic block diagram illustrating apparatus for creating an atmospheric electromagnetic radiation path modifying component in a solar concentrator apparatus according to an exemplary embodiment of the present invention; and
Figure 8 is a schematic diagram illustrating a solar concentrator apparatus according to an exemplary embodiment of the present invention.

Thus, aspects of the present invention operate on the principle of using one or more laser devices to selectively alter the refractive index and/or cause ionisation of portions of a three-dimensional region of the atmosphere so as to create or simulate an electromagnetic radiation path modifying component of a desired size and having selected radiation modifying properties for use as a solar concentrator in, for example, a solar power generation system.

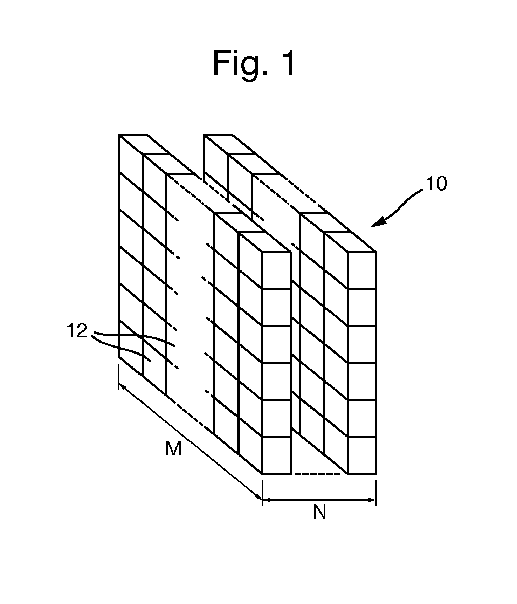

In general, and referring to Figure 1 of the drawings, the volume of the atmosphere in which a radiation modifying component is required to be created can be considered as a cell matrix 10 comprised of M rows and N columns or layers of 'cells' 12, wherein a cell is simply a predefined three-dimensional portion of the matrix. In the example shown, each cell is identical in size and shape, but this is not essential, and the present invention is not necessarily intended to be limited in this regard. It will also be appreciated that the number of cells in the vertical dimension of the cell matrix may vary. Thus, the cell matrix may be of any desired size, shape and number of cells.

Within the matrix 10, the three dimensional structure of an electromagnetic radiation path modifying device can be defined in terms of a number of cells 12 in a desired configuration, and it is these cells that will then be targeted by the laser source in order to effect the desired change in their respective properties (either by ionisation to cause reflective regions or heating to cause a change in refractive index).

It is known that an increase in temperature of a volume of air causes a corresponding decrease in density of that volume of air. As a result, the refractive index of warm air is lower than that of cooler (and therefore denser) air. Thus, some aspects of the principles employed in the present invention operate on the principle that by providing a volume of air that is warmer than the air around it, that volume of air can cause refraction of a beam of electromagnetic radiation as it passes through, in a manner similar to a convergent or divergent lens.

It is also known that if an electric field of a sufficiently high power is applied to a volume of air, the air may be ionised. Ionised air has reflective properties. Thus, some aspects of the principles employed in the present invention operate on the principle that by ionising a volume of air can cause it to reflect a beam of electromagnetic radiation as it hits that volume, in a manner similar to a mirror or similarly reflective device. A mixture of the two principles can be used to create a diffractive element, as will be described in more detail later.

Thus, referring back to Figure 1 of the drawings, it will be appreciated that by selectively heating or ionising cells 12 within the matrix 10 a three dimensional atmospheric electromagnetic radiation modifying component can be created using a high power electromagnetic radiation source. This may be achieved in a number of different ways. For example, a pulsed power laser (PPL) may be employed, and the 'Kerr' effect exploited therewith in order to attain self focussing of the laser beam at a required point (i.e. within the selected cell). Alternatively, a combination (i.e. crossing over) of two continuous wave (CW) laser beams at a required point may be used to achieve the desired effect. Either way, the lasers are configured to selectively heat or ionise the atmosphere, thus changing its refractive index and electromagnetic properties such that electromagnetic energy passing through the heated cells is refracted and/or electromagnetic energy hitting the ionised cells is reflected.

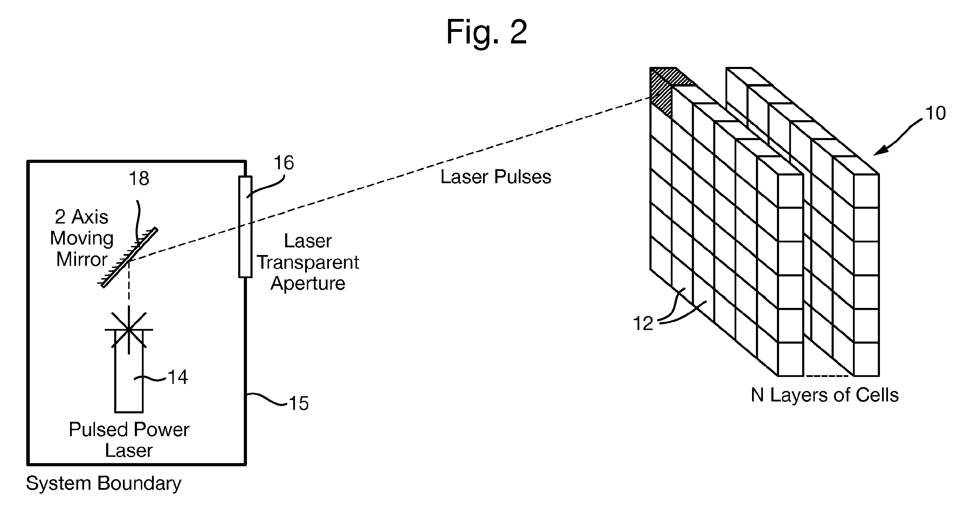

Thus, referring to Figure 2 of the drawings, apparatus used to effect one exemplary embodiment of the present invention comprises at least one laser source 14 mounted in an enclosure 15. In the example shown, the laser source 14 is a pulsed power laser source configured to emit high power laser pulses toward the cell matrix 10 via a laser transparent aperture 16. A reflective device, i.e. mirror, 18 is mounted on a dual-axis actuator (not shown) in the main laser output path, the actuator being communicably coupled with a control system that is configured to cause the actuator (and, therefore, the mirror 18) to move thereby to selectively direct the laser output through the aperture 16 toward selected cells 12 of the matrix 10. The control system may, for example, be configured to cause the laser output to be scanned across the cell matrix providing a pulse (or more than one pulse) to each selected cell, either via a raster pattern or a pattern optimised to suit the type of radiation path modifying component required to be created and its operational requirements.

As mentioned briefly above, the laser pulse is self-focussing by means of the 'Kerr' effect, thereby enabling it to deliver enough concentrated power to heat or ionise the cell at which it is directed. The Kerr effect is a change in the refractive index of a material in response to an applied electric field. In the case of a laser pulse of sufficiently high power, its electric field is sufficiently high to change the refractive index of the air. As a result, the cross-sectional area of the pulse (perpendicular to the direction of propagation) can be thought of as shrinking with distance (due to the differences in refractive index), thus bringing the pulse to an intense focus at some point down range of the laser, in this case at the selected cell. This intense focus is of sufficiently high intensity to heat or ionise the cell to change its refractive index and/or other radiation path modifying properties. One or more pulses may be provided per cell, dependent upon the desired effect and environmental conditions. It may also be necessary to periodically re-supply laser pulses to all selected cells to maintain the required change in refractive index and other radiation modifying properties for as long as the electromagnetic radiation path modifying component is required.

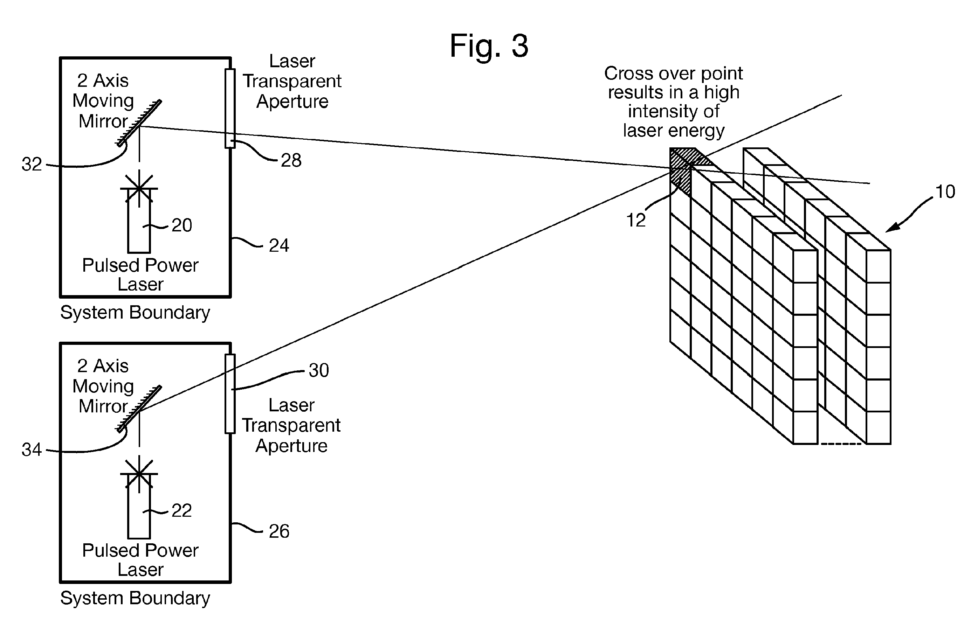

Referring to Figure 3 of the drawings, apparatus that may be used in an alternative exemplary embodiment of the invention, two CW (continuous wave) laser sources 20, 22 may be provided in respective enclosures 24, 26, each having a laser transparent aperture 28, 30 therein. Once again, each laser system is provided with a mirror 32, 34 mounted on a dual-axis actuator (not shown) communicably coupled to a control system (not shown). Operation of the system is similar, in principle, to that described previously with reference to Figure 2 of the drawings except, in this case, two (or more) spatially separated CW lasers (which may be mounted on the same platform or across different platforms) are used to selectively heat/ionise the atmosphere in each required cell. This is achieved by ensuring (through pointing) that the laser beams cross over at the same point (in the selected cell 12), thereby ensuring that sufficient power is attained. Such scanning may be performed on the basis of a control system configured to maintain a predetermined spatial separation and orientation between the atmospheric component and the electromagnetic radiation source. However, in an alternative exemplary embodiment, such scanning may be performed using a control system configured to direct the source(s) at specific coordinates corresponding to specific respective absolute locations within the atmosphere.

In yet another exemplary embodiment, and either in addition to the above-mentioned arrangements or alternatively, it is envisaged that a beam splitter could be employed to split a laser beam into numerous new paths corresponding to the configuration of a plurality of respective cells to be targeted. Thus, a plurality of such cells could be targeted simultaneously, without the need for scanning a single laser path across the cell matrix.

In the following, a number of exemplary atmospheric electromagnetic radiation path modifying components that can be created in this manner will now be described, one or more of which could be used in a solar concentrator apparatus according to any one of a number of exemplary embodiments of the present invention. However, it will be appreciated by a person skilled in the art that the principles set forth herein can be applied in numerous different ways in order to create different types and configurations of solar concentrator, and the present invention is not necessarily intended to be limited in this regard.

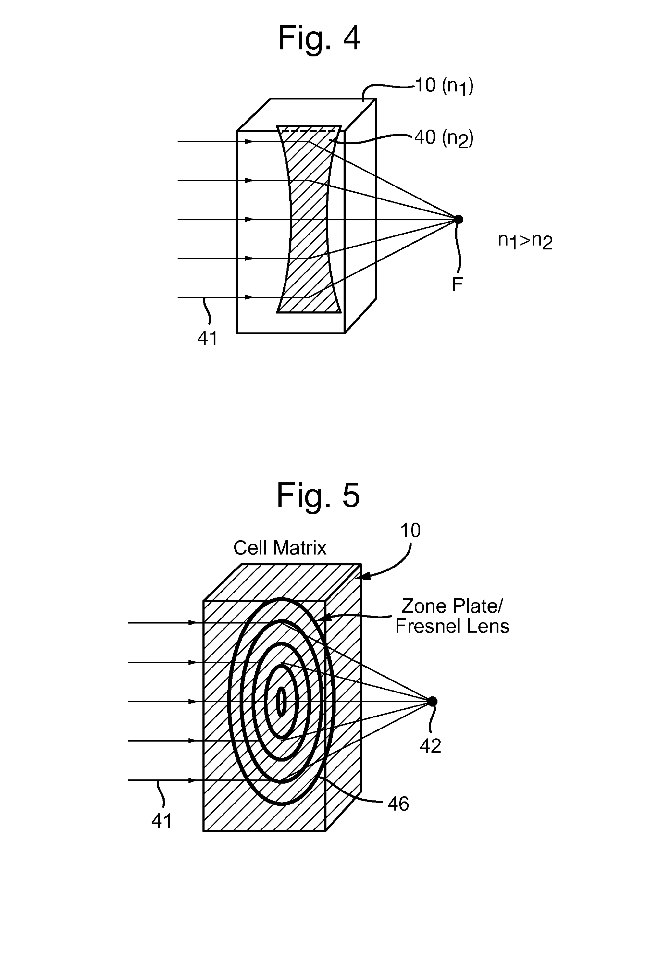

Referring to Figure 4 of the drawings, in one of its simplest forms, the principles described above may be employed to create an atmospheric converging lens. The illustrated lens 40 is of a double concave lens configuration (i.e. opposite to the normal double convex lens configuration of a physical converging lens, since then heating of the cells causes the refractive index of the air therein to be decreased) and, in the example shown, has been created generally centrally within the cell matrix 10 with its longitudinal axis in line with the generally central vertical axis of the matrix 10. In order to create the lens 40, the cells corresponding to the three-dimensional 'structure' of a double concave lens are heated, for example using one of the methods described above, thereby to reduce the refractive index of those cells relative to the surrounding cells, and cause the rays of an incoming beam 41 of electromagnetic radiation to be refracted as they enter the component 40 and converge to a focal point 42. It will be appreciated here that the refractive index (n2) of the heated region is less than that (n1) of the unheated region 10. Thus, the double concave formation of the heated region 40 is required to attain the desired converging characteristic. For the avoidance of doubt, it will be appreciated that the component 40 is a three-dimensional region within the cell matrix comprised of a plurality of atmospheric cells, each of which has been heated in order to attain the required refractive index. In an alternative exemplary embodiment, a converging lens may be created by heating the cells surrounding a three-dimensional configuration of cells in the shape of a convex lens (similar in form to that of a conventional converging lens). Thus, the resultant atmospheric element would comprise a convex lens-shaped region of unheated cells surrounded by a body of heated cells. In this case, because the refractive index of air is greater than that of the heated air, and due to the double convex shape of the unheated region, the resultant atmospheric element operates like a conventional double convex converging lens. In yet another exemplary embodiment, the body of heated cells may form an annulus having, for example, a double convex cross-section.

A control system may be employed to ensure that the correct amount of laser power is applied to each cell in order to attain the required level of heating, having regard to environmental factors and the refractive index change required to be achieved. When the component is no longer required (for example, at night), the laser power can simply be removed, and the atmospheric cells will quickly return to their normal state.

In the case described above with reference to Figure 4 of the drawings, the refractive index of the heated cells forming the lens structure is substantially constant, and varying radiation path modifying properties can be achieved by the geometry of the component (i.e. size, profile, 'thickness). In other words, as with a physical component, it is just the geometry of the three dimensional volume of heated cells that defines the function of the resultant lens.

Referring now to Figure 5 of the drawings, in other exemplary embodiments of the present invention, diffractive and refractive properties may be combined in order to create more complex configurations of atmospheric electromagnetic radiation path modifying elements for use in a solar concentrator apparatus according to exemplary embodiments of the invention. In the illustrated example, a Fresnel zone plate 46 is defined substantially diagonally across the cell matrix 10. The zone plate 46 is formed of concentric rings of heated cells, diametrically separated by unheated cell regions, or it may be formed of concentric rings of ionised cells (reflective) diametrically separated by regions of heated or unheated cells (transmissive). The resultant component combines refraction with the diffractive effects from boundaries between regions of significantly different refractive index and/or electromagnetic properties. Thus, it can be seen that more complex electromagnetic radiation path modifying components can be created by varying both the geometry and the refractive indices within the atmospheric 'structure'.

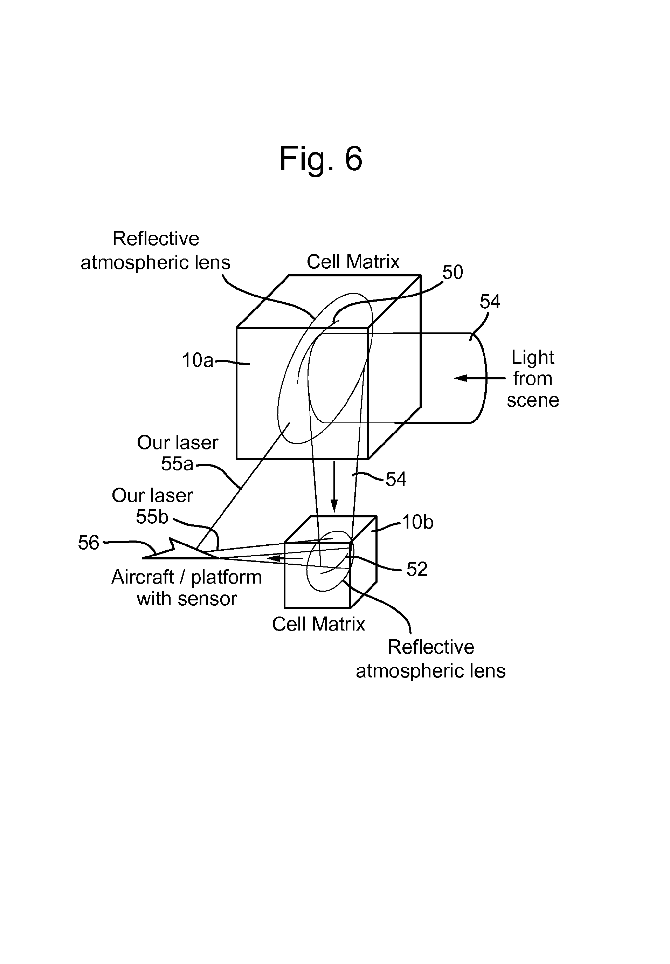

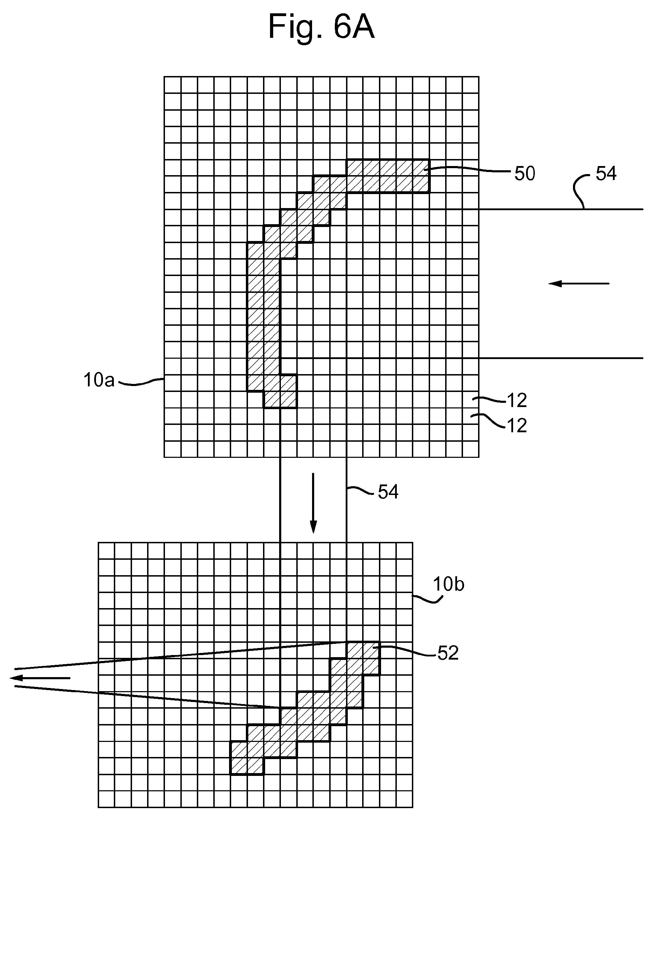

As explained above, it is also possible to simulate reflective components and arrangements for use in sensors according to various exemplary embodiments of the present invention. Thus, referring to Figures 6 and 6A of the drawings, a focussing arrangement is illustrated which is comprised of two reflective atmospheric lenses 50, 52. In this case, two spatially separated cell matrices 10a, 10b are defined, both of which are three-dimensional concave elements (relative to the incoming beam of electromagnetic radiation 54).

The atmospheric reflective lenses 50, 52 are formed by ionisation of selected cells (in a configuration matching the required 'structure' and orientation of the respective lenses within the cell matrices 10a,10b. In the example illustrated, the ionisation of the cells for both lenses may be effected by means of a pair of laser sources 55a, 55b mounted on or near a solar panel array. However, it is envisaged that, using a different control system, a single laser source could be used to create two or more spatially separated atmospheric radiation modifying components. In use, an incoming beam 54 of electromagnetic radiation, such as solar radiation hits the first reflective lens 50 and is reflected and converged toward the second reflective lens 52. The beam 54 is then reflected and converged by the second reflective lens 52 toward a specified region.

In the examples illustrated, the cell matrices 10a, 10b are 'upright' and the orientation of the atmospheric radiation path modifying elements is achieved by the pattern of the ionised/heated cells. However, it will be appreciated that, in alternative exemplary embodiments of the invention, the cell matrix itself may be oriented to match the required orientation of the radiation path modifying element and, in this case, the populated cell pattern (relative to the cell matrix) will always be the same for a particular radiation path modifying element of a specified size. Also, it will be appreciated that a more 'curved' profile of the elements thus created may be achieved by varying the degree of heating/ionisation in the peripheral populated cells.

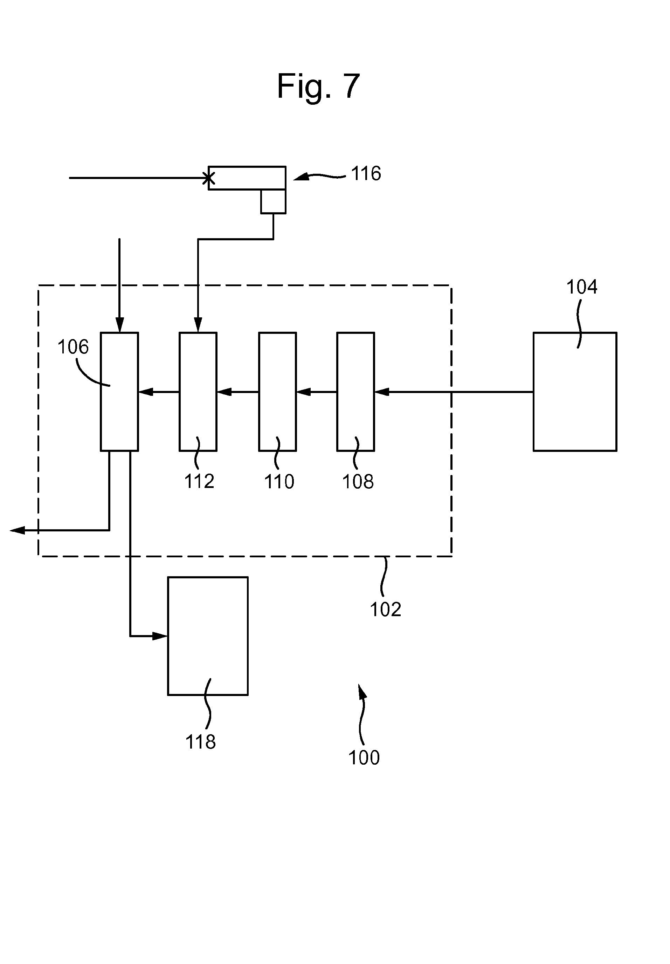

Referring to Figure 7 of the drawings, an apparatus for use in a solar concentrator in accordance with an exemplary embodiment of the present invention for creating the primary objective electromagnetic radiation path modifying element for electromagnetic radiation 'collection' comprises a control module 100 communicably coupled to, for example, a dual-axis actuator on which a reflective component is mounted within a laser system such as that described above with reference to Figures 2 and 3 of the drawings. Such a laser system may, for example, be mounted on or in relation to a solar panel array.

The control module 100 comprises a processor 102 communicably coupled to a database 104. The database has stored therein data representative of one or more cell matrices, representative of respective atmospheric volumes, and the cells therein that need to be 'populated' (i.e. heated or ionised) in order to construct a respective three-dimensional atmospheric electromagnetic radiation path modifying element. Such data may also include information as to the degree of ionisation/heating required to be maintained in order to achieve the required electromagnetic radiation modifying characteristics of the element. It will be appreciated that the database may simply include a single 'template' or populated cell matrix, bespoke to the platform or application in which the respective atmospheric element is to be used. However, in alternative exemplary embodiments, the database may include a plurality of different such templates from which a required component can be selected for use, as required. A sensor (not shown) is provided for monitoring the angle of incidence of the principal solar radiation rays and the processor is configured to receive such sensor signals, via an interface 106, and in response thereto retrieve data representative of the size and orientation of the required electromagnetic radiation path modifying component in order to focus the solar energy onto a specified region, in this case a solar panel. Electromagnetic radiation sensors and trackers are known in the art for detecting and tracking electromagnetic signals, and such devices will be known to a person skilled in the art. Feedback may be provided, not only from the quality monitoring module (described below), but also from a monitoring device located within the solar panel itself, in order to ensure that the effectiveness of the panel is optimised according to the solar position and angle of incidence.

Thus, the processor 102, in response to the sensor signal(s), searches the database 104 for the populated cell matrix data corresponding to the size and/or orientation of the atmospheric component required to be created, and retrieves the associated data. A transformation module 108 is provided, which transforms the matrix cell data onto data representative of the real atmospheric matrix cell within which the atmospheric component is to be created, both in terms of size and orientation thereof, and determines precise coordinates for the location of each real atmospheric cell relative to the corresponding respective cell of the stored matrix, and a mapping module 110 maps the respective population data from the stored cell matrix onto the data representative of the real atmospheric cell matrix accordingly. Thus, the processor now knows the precise physical location of each cell in the real atmospheric cell matrix and the cell 'population' pattern required to create the atmospheric component. Finally, such data is converted, by a signal processing module 112, into a scanning pattern comprised of a pattern of actuation signals configured to move and actuate the laser beam(s) in order to selectively heat/ionise the real atmospheric cell matrix in the required pattern (and to the required degree)n to create the three-dimensional atmospheric element. In other words, the actuation signals are configured to control the power and beam steering of the laser source(s) to heat/ionise each selected cell as required. The electromagnetic radiation sensor/tracker tracks the path of the incident solar energy and, as the sun moves across the sky, the sensor signals cause the size/orientation of the atmospheric component to be adjusted by the processor accordingly, so as to continuously optimise solar energy collection throughout the day.

Furthermore, an atmospheric lens monitoring system 116 may be provided within, or communicably coupled to, the control module 100. The atmospheric lens monitoring system 116 may, for example, comprise a low power laser of a suitable wavelength (as will be apparent to a person skilled in the art) to detect atmospheric effects. Thus, the monitoring system 116 may form part of a feedback loop with the signal processing module 112 to enable the actuation signals to be adjusted to compensate for atmospheric distortion. In alternative exemplary embodiments, the apparatus may comprise a quality monitoring module for monitoring the performance (i.e. the properties and characteristics) of the atmospheric element against a predefined set of desired criteria, and generating signals to dynamically adjust beam steering/splitting and/or power of the electromagnetic radiation source so as to reduce or eliminate deviation of the properties and characteristics of the atmospheric element from that which is defined by the predefined criteria. Such deviation may be caused by atmospheric distortion or otherwise. In other words, successive and/or continuous 'fine tuning' of the atmospheric element is facilitated to create and maintain an atmospheric element having consistently desired characteristics and quality.

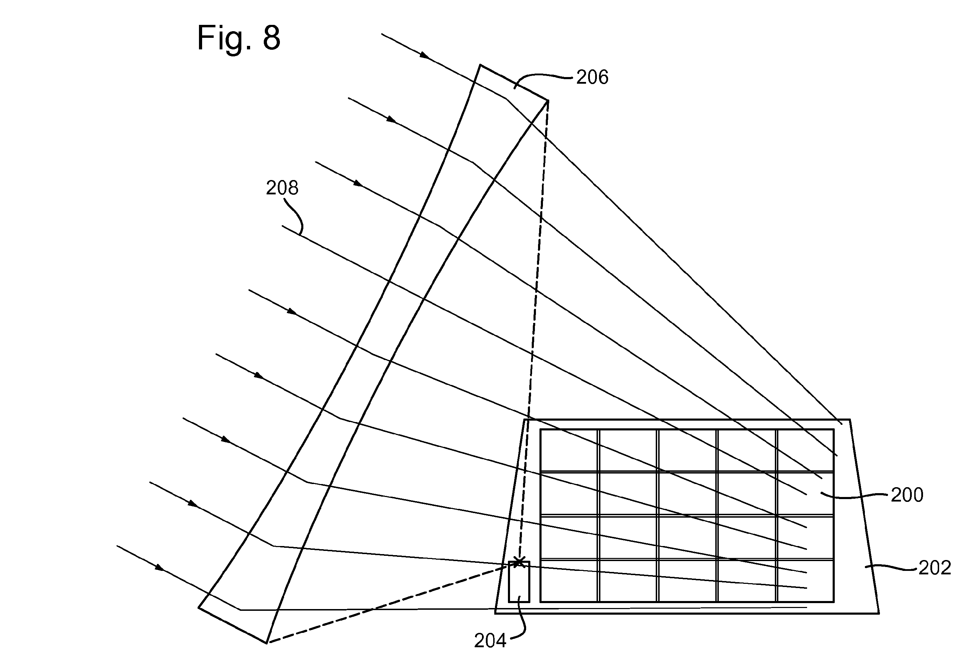

Referring to Figure 8 of the drawings, a solar concentrator apparatus according to an exemplary embodiment of the present invention is illustrated, in use. A solar panel array 200 is shown, mounted on the roof 202 of a building or other structure. A laser source 204, including a control system of the type described above is also mounted on the roof 202. In use, a sensor in the control system determines the angle of incidence of the solar energy 208, and the control system causes a large atmospheric converging lens 206 to be created in the atmosphere between the solar energy and the solar panel array 200, oriented substantially perpendicular to the angle of incidence of the rays 208. Thus, the solar energy is concentrated toward a focal point, such that more photons therefrom are concentrated onto the solar panel array 200, thereby improving the efficiency of the overall system. The tracking device within the control system tracks the changing angle of incidence of the solar energy as the sun moves across the sky, and causes the orientation of the atmospheric lens 206 to change accordingly, such that it is always perpendicular to the angle of incidence.

It will be appreciated that an alternative exemplary embodiment of the present invention could employ atmospheric reflective elements to perform the concentration of the solar energy, in a manner similar to that described with reference to Figure 6 of the drawings.

It will be appreciated by a person skilled in the art from the foregoing description that modifications and variations can be made to the described embodiments without departing from the scope of the invention as defined by the appended claims. Indeed, it will be appreciated that numerous variations are possible in terms of the shape and configuration of the three-dimensional heated/ionised cell combinations in order to define any desired atmospheric component in order to optimise solar energy collection in any desired circumstances.

## Claims

1. A solar concentrator apparatus for capturing solar energy and focussing said energy toward a specified region, the apparatus comprising an electromagnetic radiation source and a control system configured to cause electromagnetic radiation from said source to be applied to a selected plurality of three-dimensional portions of an atmospheric volume in a radiation path between a solar source and said specified region so as to heat and/or ionise the air within said portions, wherein said selected portions are spatially located together in a three-dimensional configuration so as to simulate an electromagnetic radiation path modifying element for capturing said solar energy and directing and/or converging said captured energy toward a focal point at or adjacent to said specified region.

2. Apparatus according to claim 1, wherein said selected portions are spatially located together in a substantially unbroken three-dimensional configuration corresponding to the three-dimensional shape of a simulated electromagnetic radiation path modifying element.

3. Apparatus according to claim 1, wherein said selected portions are configured such that the non-selected portions are in a configuration corresponding to a three-dimensional shape of a simulated physical electromagnetic radiation path modifying device.

4. Apparatus according to claim 1, wherein said selected portions are spatially located together in a three-dimensional configuration corresponding to an annulus having a non-circular cross-section.

5. Apparatus according to any of the preceding claims, wherein said electromagnetic radiation path modifying element simulated by said selected portions is a lens, and wherein said control system is configured to cause electromagnetic radiation from said source to be applied to said selected plurality of three-dimensional portions so as to heat the air therein and change the refractive index thereof.

6. Apparatus according to claim 5, wherein said electromagnetic radiation path modifying element simulated by said selected portions is a converging lens and said selected portions are spatially located together in a concave lens configuration.

7. Apparatus according to claim 5, wherein said electromagnetic radiation path modifying element simulated by said selected portions is a diffractive lens and said selected portions define a plurality of three-dimensional shapes, each spatially separated from each other within said atmospheric volume.

8. Apparatus according to claim 7, wherein said atmospheric element is operative to simulate a diffractive lens and said three-dimensional shapes, spatially separated, define a plurality of concentric transmissive and adjacent substantially opaque regions in the form of a zone plate.

9. Apparatus according to claim 1 or claim 2, wherein said electromagnetic radiation path modifying element simulated by said selected portions is a reflective device and wherein said control system is configured to cause electromagnetic radiation from said source to be applied to said selected plurality of three-dimensional portions so as to ionise the air therein.

10. Apparatus according to any of the preceding claims, wherein said atmospheric volume is divided into an array of three dimensional portions, and said control system is configured to cause said electromagnetic radiation from said source to be applied to said selected portions.

11. Apparatus according to claim 10, wherein the electromagnetic radiation source comprises a beam steering mechanism for selectively steering a beam of electromagnetic radiation output therefrom, said control system being communicably coupled to said beam steering mechanism and configured to generate signals for steering said beam of electromagnetic radiation relative to said atmospheric volume so as to sequentially apply electromagnetic radiation to said selected portions.

12. Apparatus according to any of the preceding claims, further comprising a monitoring module for monitoring atmospheric conditions along the path between the electromagnetic source and the simulated electromagnetic radiation path modifying element including within the element itself and the surrounding volume of said element, generating data representative thereof, and transmitting said data to said control system which is further configured to adjust at least one characteristic of said electromagnetic radiation applied to said selected portions of said atmospheric volume so as to compensate for atmospheric distortion.

13. Apparatus according to any of the preceding claims, further comprising a quality monitoring module for monitoring the performance of the simulated electromagnetic radiation path modifying element against a predefined set of desired criteria, and generating signals to dynamically adjust beam steering/splitting and/or power of the electromagnetic radiation source so as to reduce or eliminate deviation of the properties and characteristics of the simulated electromagnetic radiation path modifying element from that which is defined by the predefined criteria.

14. A method of creating an atmospheric electromagnetic radiation path modifying element operative to simulate a solar concentrator, the method comprising applying electromagnetic radiation to a selected plurality of three-dimensional portions of an atmospheric volume so as to heat and/or ionise the air within said portions, wherein said selected portions are spatially located together in a substantially unbroken three-dimensional configuration.

15. A control system for apparatus according to any of claims 1 to 13 configured to be communicably coupled to said electromagnetic radiation source, said control system comprising a database on which is stored data representative of a three-dimensional configuration of a plurality of three-dimensional element, and a processor for mapping said stored three-dimensional configuration of elements to an atmospheric volume, the processor being further configured to generate actuation signals configured to cause said electromagnetic radiation source to apply electromagnetic radiation to a selected plurality of portions of said atmospheric volume so as to heat and/or ionise the air therein, said selected portions being spatially located together in substantially the same configuration as said stored three-dimensional configuration of elements.
